# EUROPEAN PATENT APPLICATION

(11) **EP 1 760 163 A2**
(43) Date of publication of application: **07.03.2007**
(21) Application number: 06021732.0
(22) Date of filing: 09.08.2001
(51) Int. Cl.: C22B 1/248, C22B 1/24

(54) **A briquette for use as steelmaking material**

(30) Priority: 10.08.2000 JP 2000243458; 10.08.2000 JP 2000243467; 10.08.2000 JP 2000243468; 11.10.2000 JP 2000310747
(62) Divisional of application: 01955616.6
(71) Applicant: JTEKT Corporation, Chuo-ku, Osaka-shi Osaka 542-8502 (JP)
(72) Inventor: Ishihara, Masataka, Kitakatsuragi-Gun, Nara 636-0014 (JP); Maemoto, Akio, c/o JTEKT Corporation, Osaka-shi, Osaka 542-8502 (JP); Matsuda, Mitsuma, Kagawa-Gun, Kagawa 761-1702 (JP); Seo, Yoshihiro, Ikoma-Gun, Nara 636-0822 (JP); Kashino, Shouichi, Itano-Gun, Tokushima 771-1222 (JP)
(74) Representative: Sajda, Wolf E.

(57) **Abstract**

A briquette (A) for use as steelmaking material is disclosed which contains powdery pure iron and oil for suppressing oxidization of the powdery pure iron, and is dried. The briquette (A) is formed by impregnating a brittle compact (C) with an inorganic solidification assistant (D) for solidification. The brittle compact (C) is formed by compression molding cotton-like aggregates (B) containing grinding chips for an iron-based metal.

## Description

### Technical Field

The present invention relates to a briquette for use as steelmaking material and a method for forming the same and more particularly to a technique for effectively utilizing grinding chips from an iron-based metal.

### BACKGROUND ARTS

Grinding chips which occur in the machining of an iron-based metal such as bearing steel, carburized steel and the like (hereinafter, the term "machining" will be used to represent a concept also including grinding, super-finishing grinding, lapping and the like) are recovered in the form of cotton-like (fibrous) aggregates including a grinding fluid containing water and oil, abrasive grains, and the like. Since the cotton-like aggregates contain a considerable quantity of pure iron, there have been made attempts to reuse the aggregates as steelmaking material. Unfortunately, however, the cotton-like aggregates contain such a large quantity of water that bumping (phreatic explosion) will be caused by the water if the aggregates are directly charged into a blast furnace. It may be contemplated to remove the water from the cotton-like aggregates by centrifugation or the like. In this case, however, the oil contained in the cotton-like aggregates is also removed along with the water and hence, the pure iron as a component of the grinding chips is converted to iron oxide due to the self heating of the cotton-like aggregates. Therefore, the resultant aggregates need be reduced so as to be reused as steelmaking material. The use of a reducing agent results in increased costs.

On the other hand, the grinding chips with the oil adhered thereto are prone to adhered to each other. Hence, the compression molding of the cotton-like aggregates involves difficulty about accomplishing solidification to a desired strength. Furthermore, in the case of cotton-like aggregates containing a large quantity of grinding chips from an iron-based metal containing not less than 0.2 wt% of carbon, the aggregates present such a great springback when compressed that it is difficult to accomplish the solidification to a desired strength by compression molding the aggregates. Accordingly, if such compacted cotton-like aggregates are charged into the blast furnace, the aggregates are scatteringly carried upward so that most of them is collected by a dust collector.

In addition, the fibrous grinding chips contained in the cotton-like aggregates are hard to crush by means of a hammer mill or the like and hence, the cotton-like aggregates cannot be sheared finely. This leads to a difficulty of processing the cotton-like aggregates into briquettes or the like.

In reality, therefore, the cotton-like aggregates are not put to reuse but committed to a waste processing contractor for landfill disposal.

In a steel making process including a smelting step and the like, there occur dusts bearing iron and heavy metals. Hence, it is a general practice to collect such dusts as recovery dusts (OG dusts) (see, for example, Unexamined Japanese Patent Publication No.7(1995)-97638). Unfortunately, if such recovery dusts are directly charged into the blast furnace, the dusts are scatteringly carried upward to be collected by the dust collector again. As a result, the dusts are not put to reuse but committed to the landfill disposal.

However, the landfill disposal is not desirable from the standpoint of the effective utilization of resources. Furthermore, the landfill disposal entails the environmental deterioration as well as the increase of the disposal cost. The recovery dusts, in particular, requires an even greater disposal cost because the dusts contain heavy metals and must be committed to the landfill disposal as special industrial wastes.

It is an object of the invention to provide a briquette for use as steelmaking material permitting an effective reuse of grinding chips, as well as a method for forming the same.

It is another object of the invention to provide a briquette for use as steelmaking material permitting an effective reuse of recovery dusts along with the grinding chips, as well as a method for forming the same.

### DISCLOSURE OF THE INVENTION

A briquette for use as steelmaking material according to the invention, which contains powdery pure iron and oil and which is dried, the briquette is formed by solidifying powder using a solidification assistant, the powder obtained by finely shearing cotton-like aggregates containing grinding chips from an iron-based metal.

The so-formed briquette for use as steelmaking material is a dry solid mass and hence, the briquette is unlikely to cause bumping or to be scatteringly carried upward if it is directly charged into a blast furnace. In addition, the handlings, such as transportation, storage and the like, of the briquette are easy. Since the briquette contains oil, the oxidization of the powdery pure iron is suppressed. Therefore, the briquette can be reused as a high-quality steelmaking material, thus contributing to the environmental conservation as well as to the reduction of disposal cost of the grinding chips.

The above briquette for use as steelmaking material may further contain coke powder. In this case, because of the solidification assistant and coke, the quite rigidly solidified briquette can be formed simply by compression molding the powder.

The briquette for use as steelmaking material containing coke may further contain recovery dusts collected in a steelmaking process, In this case, the recovery dusts can be reused together with the grinding chips after solidification.

It is preferred that the solidification assistant is at least one selected from the group consisting of ricepolishings,blackstrap molasses,starches,calcined lime, coloidal silica, silicate of soda, aluminum phosphate, vinyl acetate sludge, asphalt emulsion and bentonite . The assistant provides the rigid solidification despite the presence of the oil. Hence, the handlings, such as transportation, storage and the like, of the briquette are further facilitated.

A briquette for use as steelmaking material according to the invention, which contains powdery pure iron and oil and which is dried, the briquette is formed by impregnating a brittle compact with an inorganic solidification assistant for solidification, the brittle compact formed by compression molding cotton-like aggregates containing grinding chips from an iron-based metal.

This briquette is a dried solid mass, as well. Hence, the briquette is unlikely to cause bumping or to be sactteringly carried upward if it is directly charged into the blast furnace. In addition, the handlings, such as transportation, storage and the like, of the briquette are easy. Since the briquette contains oil, the oxidization of the powdery pure iron is suppressed. Therefore, the briquette can be reused as a high-quality steelmaking material, thus contributing to the environmental conservation as well as to the reduction of disposal cost of the grinding chips. In this briquette for use as steelmaking material, it is preferred that the inorganic solidification assistant is at least one selected from the group consisting of coloidal silica, silicate of soda and aluminum phosphate . The material provides the rigid solidification despite the presence of the oil. Hence, the handlings, such as transportation, storage and the like, of the briquette are further facilitated.

It is preferred that each of the above briquettes for use as steelmaking material contains 2 to 30 wt% of solidification assistant , so that the briquette is solidified even more rigidly. Thus, the handlings, such as transportation, storage and the like, of the briquette are further facilitated.

It is preferred that each of the above briquettes is substantially shaped like a pillow . In this case, the briquette can be increased in compressive strength and is less likely to incur partial fracture. Hence, the handlings, such as transportation, storage and the like, of the briquette are further facilitated.

A method for forming a briquette for use as steelmaking material according to the invention comprises in this order: a step of compression molding cotton-like aggregates containing grinding chips from an iron-based metal and a grinding fluid containing oil and water, thereby forming a brittle compact in which the fibrous grinding chips are roughly sheared and which is removed of excessive water and oil; a step of crushing the brittle compact for further finely shearing the grinding chips, and mixing the resultant grinding chips with a solidification assistant for obtaining powder containing the solidification assistant; a step of forming a briquette by compression molding a predetermined amount of the powder for solidification; and step of drying the resultant briquette.

According to the so-arranged method for forming the briquette for use as steelmaking material, the rough shearing of the fibrous grinding chips, which is hard to accomplish by the prior art, can be done easily by compression molding the cotton-like aggregates. In the step of crushing the brittle compact, the rough shearing of the fibrous grinding chips in the brittle compact have been done previously so that the grinding chips can be sheared in an easy and effective manner. Thus, the fine powdery particles can be obtained in an easy and positive manner. Furthermore, because of the solidification assistant present in the powder, the solidification to a desired strength can be achieved simply by compression molding the powder. In addition, the aforementioned steps are performed as retaining the oil contained in the grinding fluid and hence, the oxidization of the pure iron as a component of the grinding chips can be suppressed. Therefore, the cotton-like aggregates can be reused as a high-quality steelmaking material, thus contributing to the environmental conservation as well as to the reduction of disposal cost of the grinding chips.

It is preferred that at least one selected from the group consisting of rice polishings, blackstrap molasses, starches, calcined lime, coloidal silica, silicate of soda, aluminum phosphate, vinyl acetate sludge, asphalt emulsion and bentonite is employed as the solidification assistant by the above method for forming the briquette for use as steelmaking material. The assistant provides the easy and rigid solidification of the powder containing oil. Thus is obtained the briquette for use as steelmaking material which features easy handlings such as transportation, storage and the like.

In the above method for forming the briquette for use as steelmaking material, it is preferred that the solidification assistant is admixed in an amount of 2 to 30 wt%. This provides an even more rigid solidification of the powder. Thus is obtained the briquette for use as steelmaking material featuring even easier handlings such as transportation, storage and the like.

Another method for forming a briquette for use as steelmaking material according to the invention comprises in this order: a step of compression molding cotton-like aggregates containing grinding chips from an iron-based metal and a grinding fluid containing oil and water, thereby forming a brittle compact in which the fibrous grinding chips are roughly sheared and which is removed of excessive water and oil; a step of impregnating the brittle compact with a solidification assistant; and a step of drying the brittle compact impregnated with the solidification assistant.

According to the so-arranged method for forming the briquette for use as steelmaking material, the rough shearing of the fibrous grinding chips, which is hard to accomplish by the prior art, can be done easily by compression molding the cotton-like aggregates. Furthermore, because of the solidification assistant impregnated into the brittle compact, the solidification to a desired strength can be achieved simply by compression molding the brittle compact. In addition, the aforementioned steps are performed as retaining the oil contained in the grinding fluid and hence, the oxidization of the pure iron as a component of the grinding chips can be suppressed. Therefore, the cotton-like aggregates containing grinding chips can be reused as a high-quality steelmaking material, thus contributing to the environmental conservation as well as to the reduction of disposal cost of the grinding chips. Furthermore, the briquette can be formed efficiently because the solidification can be accomplished without finely crushing the cotton-like aggregates.

It is preferred that at least one selected from the group consisting of coloidal silica, silicate of soda and aluminum phosphate is employed as the solidification assistant by the above method for forming the briquette for use as steelmaking material. The assistant provides the easy and rigid solidification of the brittle compact containing oil. Thus is obtained the steelmaking material featuring easy handlings such as transportation, storage and the like. In this method, it is preferred that the solidification assistant is impregnated in an amount of 2 to 30 wt%. This provides an even more rigid solidification of the brittle compact and hence, there may be obtained the briquette for use as steelmaking material featuring even easier handlings such as transportation, storage and the like.

Still another method for forming a briquette for use as steelmaking material according to the invention comprises in this order: a step of compression molding cotton-like aggregates containing grinding chips from an iron-based metal and a grinding fluid containing oil and water, thereby forming a brittle compact in which the fibrous grinding chips are roughly sheared and which is removed of excessive water and oil; a step of crushing the brittle compact for further finely shearing the grinding chips, and mixing the resultant grinding chips with coke and a solidification assistant for obtaining powder containing the coke and solidification assistant; a step of forming a briquette by compression molding a predetermined amount of the powder for solidification; and a step of drying the resultant briquette.

In the so-arranged method for forming the briquette for use as steelmaking material, as well, the rough shearing of the fibrous grinding chips, which is hard to accomplish by the prior art, can be readily done by compression molding the cotton-like aggregates. In the step of crushing the brittle compact, the rough shearing of the fibrous grinding chips in the brittle compact have been done previously so that the grinding chips can be sheared in an easy and effective manner. Thus, the fine powdery particles can be obtained in an easy and positive manner. Furthermore, because of the effect of the coke and the like present in the powder, the quite rigidly solidified briquette for use as steelmaking material can be obtained simply by compression molding the powder. In addition, the above steps are performed as retaining the oil contained in the grinding fluid and hence, the oxidization of the pure iron as a component of the grinding chips can be suppressed. Therefore, the cotton-like aggregates can be reused as a high-quality steelmaking material, thus contributing to the environmental conservation as well as to the reduction of disposal cost of the grinding chips. Furthermore, there may be obtained the briquette for use as steelmaking material containing the coke serving as a carburization material and a reducing agent, thus featuring a higher added value.

In the above method for forming the briquette for use as steelmaking material, the crushed brittle compact may be further admixed with recovery dusts collected in a steelmaking process , This permits the recovery dusts to be reused together with the grinding chips after solidification, thus contributing to the environmental conservation as well as to the reduction of the disposal cost of the recovery dusts.

In this method for forming the briquette for use as steelmakingmaterial, it is preferred that the recovery dusts are admixed in an amount of 10 to 30 wt%.

This permits a briquette of a desired hardness to be formed easily. It is preferred that at least one selected from the group consisting of rice polishings, blackstrap molasses, starches, calcined lime, coloidal silica, silicate of soda, aluminum phosphate, vinyl acetate sludge, asphalt emulsion and bentonite is employed as the solidification assistant. The assistant provides an easy and stable solidification of the powder containing oil. It is further preferred that the solidification assistant is admixed in an amount of 1 to 10 wt%. This provides an even easier and more stable solidification of the powder. On the other hand, it is further preferred that the coke is admixed in an amount of 5 to 50 wt%. This permits the briquette for use as steelmaking material to be solidified even more rigidly.

In all of the aforementioned methods for forming the briquette for use as steelmaking material, it is preferred that the employed cotton-like aggregates are adjusted for the content of water to less than 50 wt% and for the content of oil to less than 10 wt%.

This results in easy handlings, such as transportation and the like, of the cotton-like aggregates and also permits excessive water and oil to be readily and adequately removed from the brittle compact only by the compression molding.

In all of the aforementioned methods for forming the briquette for use as steelmaking material, it is preferred that the brittle compact is adjusted for the content of water to 2 to 12 wt% and for the content of oil to 1 to 5 wt%. In this case, the brittle compact can be solidified to a suitable hardness while the oxidization of the grinding chips can be effectively suppressed by the minimum amount of residual oil.

In all of the aforementioned methods for forming the briquette for use as steelmaking material, it is preferred that immediately after the compression molding, the briquette is subjected to quick cooling. This permits the briquette to be solidified in an easy and stable manner.

In all of the aforementioned methods for forming the briquette for use as steelmaking material, it is preferred that a product substantially shaped like a pillow is obtained as the briquette, In this case, there may be obtained a briquette which has a high compressive strength and is less likely to incur partial fracture and which features even more easier handlings such as transportation, storage and the like.

In all of the aforementioned methods for forming the briquette for use as steelmaking material, a material containing not less than 0.2 wt% of carbon may be employed as the grinding chips. In the case of cotton-like aggregates containing the grinding chips having such a great springback, as well, the cotton-like aggregates can be rigidly solidified while eliminating the influence of the springback.

### BRIEF DESCRIPTION OF THE DRAWINGS

Fig.1 is a partially cut-away perspective view showing a briquette for use as steelmaking material according to one embodiment of the invention.
Fig. 2 is a group of diagrams showing steps of a method for forming the briquette for use as steelmaking material according to one embodiment of the invention.
Fig.3 is a group of diagrams showing steps of a method for forming the briquette for use as steelmaking material according to another embodiment of the invention.
Fig. 4 is a group of diagrams showing steps of a method for forming the briquette for use as steelmaking material according to still another embodiment of the invention.

### BEST MODES FOR CARRYING OUT THE INVENTION

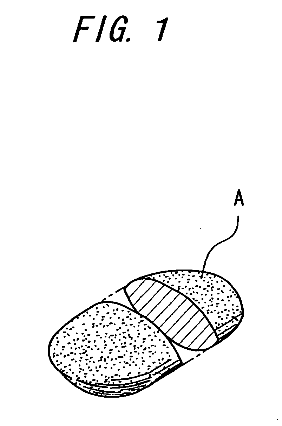

Fig.1 is a partially cut-away perspective view showing a briquette for use as steelmaking material according to one embodiment of the invention. The briquette A contains powdery pure iron and oil, and is formed by solidifying powder using a solidification assistant, the powder obtained by finely shearing cotton-like aggregates containing grinding chips from an iron-based metal and a grinding fluid containing oil and water; and drying the solidified product for removal of the water. The briquette A is substantially shaped like a pillow.

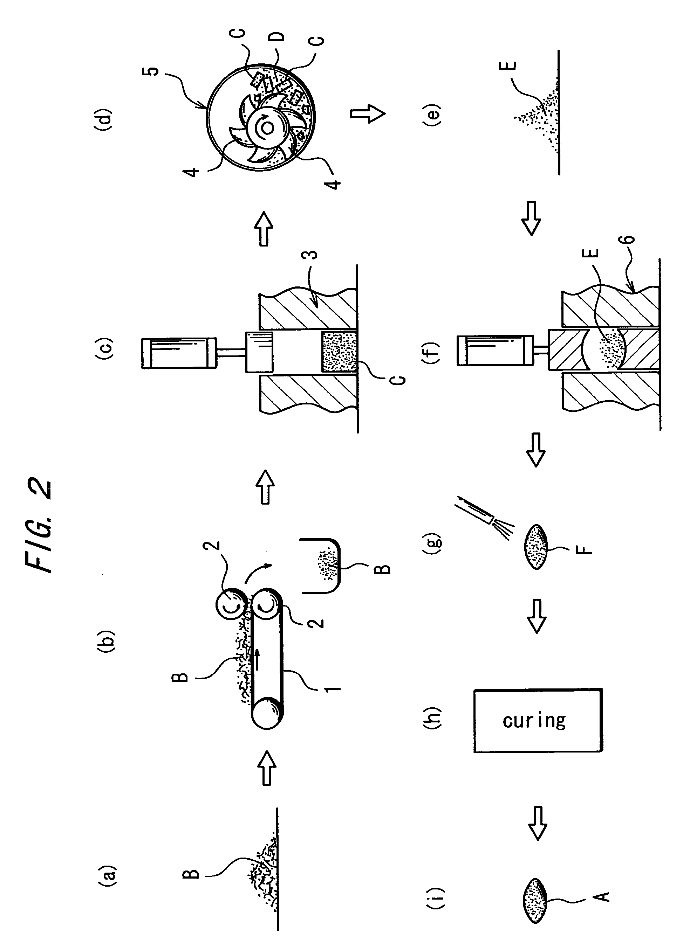

Fig. 2 is a group of diagrams showing steps of a method for forming the briquette A. In the forming of the briquette A, cotton-like aggregates B (see Fig.2(a)) of grinding chips produced by machining an iron-based metal are first compressed for preparatory adjustment of contents of water and oil which are components of the grinding fluid contained in the cotton-like aggregates B. The cotton-like aggregates B are compressed by, for example, being clamped between a pair of rollers 2 as being carried on a belt conveyor 1 (see Fig.2(b)). It is preferred in this process that the cotton-like aggregates are adjusted for the content of water to less than 50 wt% and for the content of oil to less than 10 wt%. This facilitates the handlings, such as transportation, storage and the like, of the cotton-like aggregates B.

Next, the cotton-like aggregates B thus adjusted for the contents of water and oil are compression molded in a mold 3 using a press thereby forming a brittle compact C (see Fig. 2(c)). The grinding chips shaped like spiral fiber contained in the cotton-like aggregates B are roughly sheared by the compression molding. Additionally, excessive water and oil are removed such that the brittle compact C is adjusted for the content of water to 2 to 12 wt% and for that of oil to 1 to 5 wt%. Thus, the oxidization of the grinding chips is effectively suppressed by the minimum possible amount of residual oil. Furthermore, the cotton-like aggregates B have been adjusted for the content of water to less than 50 wt% and for the content of oil to less than 10 wt% in the pervious step and hence, the contents of water and oil in the brittle compact C can be easily and properly adjusted only by the compression molding.

The brittle compact C is formed in a shape easy to handle, such as circular cylinder, sphere, prism or the like, and is compacted to such a strength as not to collapse when sent to the subsequent step.

Next, the brittle compact C together with a solidification assistant D are charged in a mixer 5 equipped with a chopper having rotary blades 4 (or a Henschel mixer) for crushing (see Fig.2(d)). Thus, the grinding chips in the brittle compact C are further finely sheared (finishing shearing) and thus is obtained powder E containing powdery pure iron and the solidification assistant D (see Fig.2(e)). The powdery pure iron has a greater diameter of the order of 3 to 1000 µm. In the crushing of the brittle compact C, the finishing shearing can be smoothly done because the fibrous grinding chips in the brittle compact C have previously been subjected to the rough shearing. In a case where the fibrous grinding chips in the brittle compact C are not roughly sheared, it is extremely difficult to crush the compact C by means of the mixer 5. Accordingly, it is impossible to obtain the fine powder E.

As the solidification assistant D, there may preferably be employed one or more than one selected from the group consisting of rice polishings (refined rice polishings), blackstrap molasses such as from sugar cane, starches such as potato starch, corn starch and the like, calcined lime, coloidal silica, silicate of soda, aluminum phosphate, vinyl acetate sludge, asphalt emulsion, and bentonite. The solidification assistant D may preferably be present in concentrations of 2 to 30 wt%. The rice polishings and blackstrap molasses are particularly preferred as the solidification assistant D because they are effective to prevent the powdery pure iron from being altered in quality and are less costly. After kneading, the asphalt emulsion is separated into an asphalt component and water, the asphalt component presenting caking which develops strength. Anionic asphalt is preferably used in the asphalt emulsion.

Subsequently, a predetermined amount of the above powder E is compression molded in a mold 6 using a press (see Fig.2(f)), thereby forming a water-containing briquette F which contains a large quantity of pure iron and is substantially shaped like a pillow. In the compression molding of the powder E, the pure iron particles with oil adhered thereto are firmly bonded together via the water contained in the solidification assistant D and powder E whereby the powder E can be solidified. Particularly, in a case where the powder E contains 5 to 6 wt% of water, 4 wt% of rice polishings and 2 wt% of blackstrap molasses or where the powder E contains 7 to 15 wt% of water and 2 to 10 wt% of vinyl acetate sludge, there may be obtained a water-containing briquette F more rigidly solidified.

The phrase "substantially shaped like a pillow" means a shape having a rounded circumferential edge and gradually increased in thickness from the circumferential edge toward its center, the shape including those of eggs, almond, rugby ball and the like. Forming the powder into such a shape gives the briquette A which is hard to collapse withstanding the compressive load and is less likely to incur partial fracture at a corner portion thereof or the like.

Immediately after the compression molding, the water-containing briquette F is subjected to quick cooling by applying thereto air blow at normal temperatures or cooled air blow (see Fig.2(g)). This provides an easy and stable solidification of the water-containing briquette F. Subsequently, the water-containing briquette F is cured (dried) for removal of the water contained therein (see Fig.2(h)). Thus is obtained the briquette A for use as steelmaking material (see Fig.2(i)). It is preferred to perform the curing of the briquette for about two days in the light of the assured removal of the contained water.

The briquette A thus formed has a porous nature resulting from the solidification of the powder E and hence, the water contained therein can be easily and assuredly removed by curing. Accordingly, if the briquette is directly charged into the blast furnace, there is no fear of causing bumping or of being scatteringly carried upward to be discharged. In addition, the oxidization of the pure iron is effectively suppressed because the processing is performed as retaining a part of the oil of the grinding fluid at all times. As to a briquette A formed from cotton-like aggregates B containing grinding chips from a bearing steel (SUJ-2), for example, it is confirmed that the pure iron is present in concentrations of 84 to 95 wt%. Accordingly, the briquette A presents at least 90% of a high smelting yield to be worthy of a high-quality steelmaking material which can be offered to steel makers for pay. Furthermore, the briquette is in the solid form, thus facilitating the transportation and other handlings thereof.

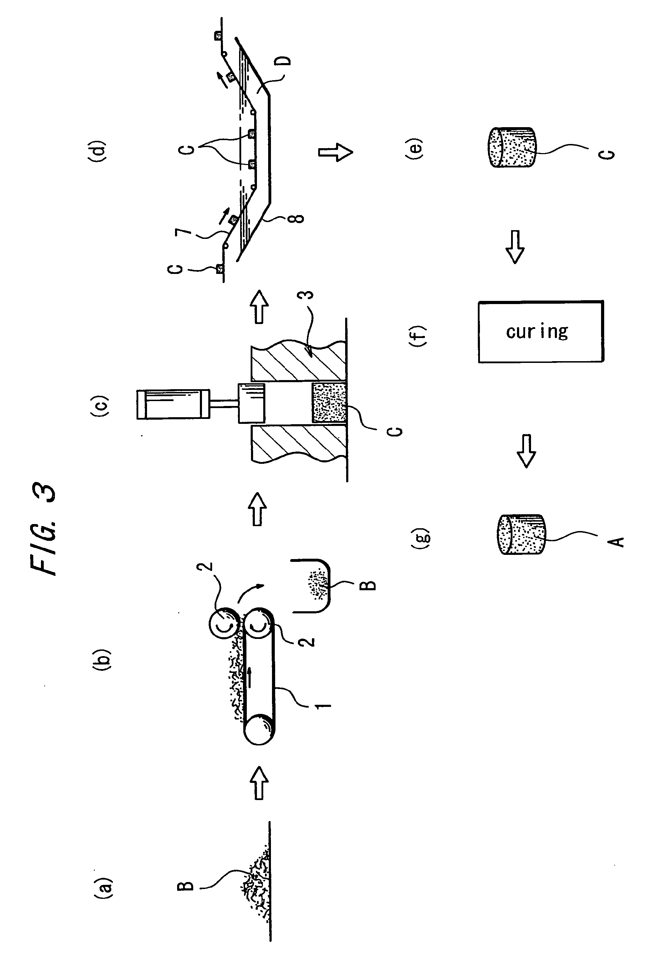

Fig. 3 is a group of diagrams showing steps of another method for forming the briquette A of the invention. This method differs from the method of Fig.2 in that the step of crushing the brittle compact C is dispensed with. That is, the method forms the brittle compact C from the cotton-like aggregates B just the same way as in the method shown in Fig.2 (see Figs.3(a)-(c)). The contents of water and oil of this brittle compact C are the same as those of the compact obtained by the method shown in Fig.2.

Then, the brittle compact C obtained through these steps is impregnated with a solidification assistant D in liquid form. The impregnation with the solidification assistant D is performed by, for example, immersing the brittle compact C in the solidification assistant D filled in a tank 8 as carrying the compact on a belt conveyor 7 (see Fig.3(d)). As the solidification assistant D, there may preferably be employed at least one selected from the group consisting of coloidal silica, silicate of soda, and aluminum phosphate. The solidification assistant D may preferably be impregnated in concentrations of 2 to 30 wt%. This permits the brittle compact C to be readily and rigidly solidified.

Subsequently, the brittle compact C impregnated with the solidification assistant D (see Fig.3(e)) is cured (dried) (see Fig.3(f)), and thus is obtained the briquette A for use as steelmaking material (see Fig.3(g)). For curing, the compact may be quickly cooled by applying thereto air blow at normal temperatures or cooled air blow.

The briquette A thus formed can present the same effect as the briquette A formed by the method shown in Fig.1. In addition, the method shown in Fig.3 is more efficient in forming the briquette A because it omits the step of crushing the brittle compact C.

Besides the circular cylinder shape shown in the figure, the briquette A may also take a substantially pillow-like shape, such as of eggs, almond, rugby ball and the like. The pillow-like shape has a rounded circumferential edge and is gradually increased in thickness from the circumferential edge toward its center.

The methods for forming the briquette shown in Figs.2 and 3 are preferably applied to the reuse of grinding chips containing not less than 0.2 wt% of carbon. Such grinding chips present a great springback and hence, are hard to solidify. However, the application of the inventive method permits the rigidly solidified briquette A to be formed easily, eliminating the influence of the springback of the grinding chips. A typical example of the grinding chips containing not less than 0.2 wt% of carbon includes grinding chips from a bearing steel.

In the foregoing embodiment, the crushing of the brittle compact C is performed concurrently with the admixing of the solidification assistant D. However, the crushing of the brittle compact C and the admixing of the solidification assistant D may be performed in separate steps.

The briquette A of the invention may further contain coke powder. Alternatively, the inventive briquette A may further contain the coke powder and recovery dust powder collected in the steelmaking process.

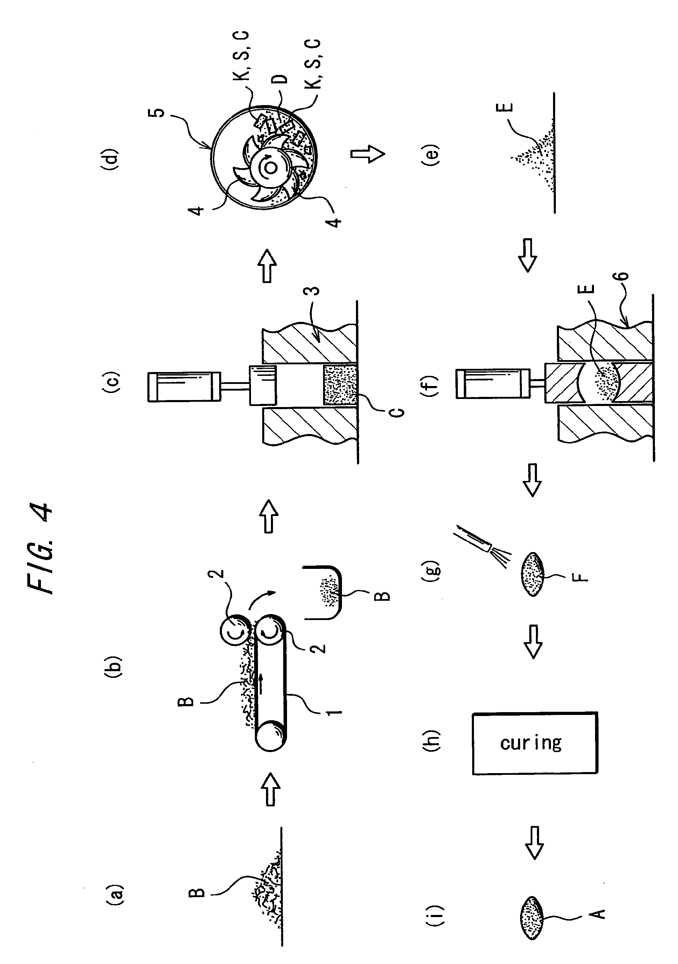

Fig. 4 is a group of diagrams showing steps of a method for forming a briquette A further containing the coke powder and the recovery dust powder. In this method of forming the briquette A, a brittle compact C is formed from the cotton-like aggregates B just the same way as in the method shown in Fig.2 (see Figs.4(a)-(c)). The contents of water and oil of the brittle compact C are also the same as those of the compact obtained by the method shown in Fig.2.

Next, the brittle compact C together with coke K, recovery dusts S produced and collected in the steelmaking process, and the solidification assistant D are charged into a mixer 5 equipped with a chopper having rotary blades 4 (or a Henschel mixer) for crushing (see Fig.4(d)). In this step, 50 to 70 wt% of the brittle compact C, 5 to 50 wt% of the coke K, 10 to 30 wt% of the recovery dusts S and 1 to 10 wt% of the solidification assistant D are blended together.

Thus, the grinding chips in the brittle compact C are further finely sheared (finishing shearing), and thus is obtained powder E containing the pure iron, coke K, recovery dusts S and powdery solidification assistant D (see Fig.4(e)).

Similarly to the embodiment shown in Fig.2, one or more than one selected from the group consisting of rice polishings, blackstrap molasses such as from sugar cane, starches, calcined lime, coloidal silica, silicate of soda, aluminum phosphate, vinyl acetate sludge, asphalt emulsion and bentonite are preferably employed as the solidification assistant D. As the recovery dusts S, for example, there may be employed those containing 10 to 55 wt% of iron (total Fe) which are produced and collected in the steelmaking process.

The subsequent steps are the same as those shown in Fig.2. Specifically, a predetermined amount of the above powder E is compression molded by means of, for instance, a roller type molding machine or a cylinder type molding machine 6 (see Fig.4(f)), thereby forming a briquette F substantially shaped like a pillow and containing a large quantity of pure iron. In the compression molding of the powder E, the pure iron particles with oil adhered thereto are firmly bonded together via the water contained in the coke K, solidification assistant D and the powder E whereby the powder E can be solidified. Immediately after the compression molding, the briquette F is subjected to quick cooling by applying thereto air blow at normal temperatures or cooled air blow (see Fig.4(g)). Then, the briquette F is cured (dried) for removal of the water contained therein (see Fig.4(h)) and thus is obtained the briquette A for use as steelmaking material (see Fig.4(i)).

The resultant briquette A is also formed by solidifying the powder E and hence, can be readily and assuredly removed of the water contained therein by curing. Accordingly, if the briquette is directly charged into the blast furnace, there is no fear of causing bumping or of being scatteringly carried upward to be discharged. In addition, the oxidization of the pure iron is effectively suppressed because the processing is performed as retaining a part of the oil of the grinding fluid at all times. Furthermore, the briquette features a higher added value because it further contains the coke K serving as a carburization material and a reducing agent. What is more, the briquette is in the solid form, thus facilitating the transportation and other handlings thereof.

The above forming method, in particular, provides a more rigidly solidified briquette A for use as steelmaking material because 5 to 50 wt% of coke and 1 to 10 wt% of solidification assistant are admixed. In addition, the method permits the briquette of a desired hardness to be formed easily because the mixing ratio of the recovery dusts is defined to range from 10 to 30 wt%.

The above method for forming the briquette A is also particularly preferably applied to the reuse of the grinding chips containing not less than 0.2 wt% of carbon.

In the above embodiment, the crushing of the brittle compact C is performed concurrently with the admixing of the coke K, recovery dusts S and solidification assistant D. However, the crushing of the brittle compact C and the admixing of the coke K and the like may be performed in separate steps. The above embodiment may be practiced without admixing the recovery dusts S.

## Claims

1. A briquette for use as steelmaking material, which contains powdery pure iron and oil for suppressing oxidization of the powdery pure iron, and is dried, the briquette (A) being formed by impregnating a brittle compact (C) with an inorganic solidification assistant (D) for solidification, the brittle compact (C) being formed by compression molding cotton-like aggregates (B) containing grinding chips from an iron-based metal.

2. The briquette according to claim 1,
wherein the brittle compact (C) is adjusted to have a content of oil of 1 to 5 wt%.

3. The briquette according to claim 1 or 2,
wherein the brittle compact (C) is adjusted to have a content of water of 2 to 12 wt%.

4. The briquette according to any of claims 1 to 3,
wherein the inorganic solidification assistant (D) is at least one selected from the group consisting of colloidal silica, silicate of soda and aluminum phosphate.

5. The briquette according to any of claims 1 to 4,
containing 2 to 30 wt% of the solidification assistant (D).

6. The briquette according to any of claims 1 to 5,
wherein the briquette (A) is substantially shaped like a pillow.
